# FASCICULE DE BREVET EUROPEEN

(11) **EP 0 560 663 B1**
(45) Date de publication et mention de la délivrance du brevet: **26.06.1996**
(21) Numéro de dépôt: 93400593.5
(22) Date de dépôt: 08.03.1993
(51) Int. Cl.: B60J 10/08, B60R 13/06

(54) **Dispositif d'étanchéite à élément profilé tubulaire, notamment pour véhicule automobile**
Dichtungsvorrichtung mit rohrförmigem Profilelement, insbesondere für Kraftfahrzeug
Sealing device with tubular profile, in particular for motor-vehicle

(30) Priorité: 10.03.1992 FR 9202836
(43) Date de publication de la demande: 15.09.1993
(73) Titulaire: HUTCHINSON, F-75008 Paris (FR)
(72) Inventeur: Guillon, Henri, Maurice sur Fessard (FR)
(74) Mandataire: Orès, Bernard

(56) Documents cités:
- DE-A- 3 336 733
- FR-A- 2 492 939
- FR-A- 2 624 191
- FR-A- 2 642 809
- FR-A- 2 669 279
- US-A- 4 769 947
- PATENT ABSTRACTS OF JAPAN vol. 12, no. 169 (M-699)(3016) 20 Mai 1988 & JP-A-62 283 034 (NISSAN MOTOR) 8 Décembre 1987

## Description

L'invention se rapporte aux dispositifs d'étanchéité à élément profilé tubulaire, notamment pour véhicule automobile.

Elle vise, en particulier, un dispositif d'étanchéité comportant un élément de fixation au bâti ou à la caisse d'un véhicule automobile et un élément profilé tubulaire avec lequel est propre à coopérer une partie mobile du véhicule comme une porte, un capot de moteur ou de coffre, etc... De tels dispositifs d'étanchéité sont connus de longue date et dans de nombreuses réalisations, par exemple par FR-A-2 257 008, FR-A-2 492 939, FR-A-2 624 191, ou FR-A-2 642 809. Ce dernier document, en particulier, expose les conditions auxquelles doit satisfaire un dispositif d'étanchéité pour, -lorsqu'il est monté sur tout ou partie du périmètre d'une ouverture d'une caisse de véhicule automobile-, épouser les formes de son support en respectant diverses exigences fonctionnelles tel que l'aspect esthétique, l'accostage, etc... lesquelles ne sont pas toujours remplies, notamment lorsque des déformations locales sont imposées au dispositif, provoquant des plis, des ondulations, des frisures superficielles, etc...

Si, comme l'indique également FR-A-2 642 809, de tels inconvénients peuvent compromettre l'étanchéité et la facilité de fermeture d'une porte ou analogue avec laquelle coopère le dispositif, ils sont en outre particulièrement gênants pour des applications où l'élément profilé tubulaire est garni d'un revêtement textile comme du velours, un aspect irrégulier de ce dernier étant innaceptable pour les véhicules de prix élevé qu'ils équipent et où ils sont mis en oeuvre précisément pour donner un aspect de qualité exceptionnelle.

Les solutions déjà proposées pour réduire ces inconvénients, y compris dans les documents cités, ne sont pas entièrement satisfaisantes dans la mesure où elles prévoient une découpe d'une partie visible de l'élément profilé tubulaire, ou de remplacer une portion de la section de l'élément tubulaire par un élément rapporté en un élastomère compact et c'est, par conséquent, un but général de l'invention de fournir un dispositif d'étanchéité qui pallie les inconvénients des dispositifs connus.

C'est, aussi, un but de l'invention de fournir un tel dispositif dont la mise en oeuvre soit particulièrement simple, y compris sur des éléments de carrosserie dont le profil comporte des parties à faible rayon de courbure.

A cet effet, l'invention propose un dispositif d'étanchéité comprenant un élément de fixation de section en U à un support, notamment le bâti ou la caisse d'un véhicule automobile et un élément profilé tubulaire avec lequel est propre à coopérer à étanchéité une partie mobile comme une porte, capot de moteur, de coffre ou analogue de l'automobile (Dispositif divulgué, par exemple dans FR-A-2 642 809), caractérisé en ce que l'élément profilé tubulaire est rattaché à l'élément de fixation, en forme de U, le long d'au moins une bande de pontage centrale et deux bandes de pontage latérales, et en ce que les bandes de pontage latérales sont sectionnées localement dans les parties d'angle du support en des zones discrètes, l'élément profilé tubulaire restant rattaché à l'élément de fixation dans ces zones par la bande de pontage centrale.

Selon une mode de réalisation de l'invention, l'élément profilé tubulaire au moins est garni sur sa face externe d'un revêtement comme un velours, ou analogue.

L'invention sera bien comprise par la description qui suit, faite à titre d'exemple et en référence au dessin annexé, dans lequel :
- la figure 1 est une vue schématique en perspective, d'un dispositif d'étanchéité selon l'invention ;
- la figure 2 est une vue en coupe dans le plan II-II de la figure 1, mais à plus grande échelle ; et
- la figure 3 est une vue en coupe dans le plan III-III de la figure 1, mais à plus grande échelle également.

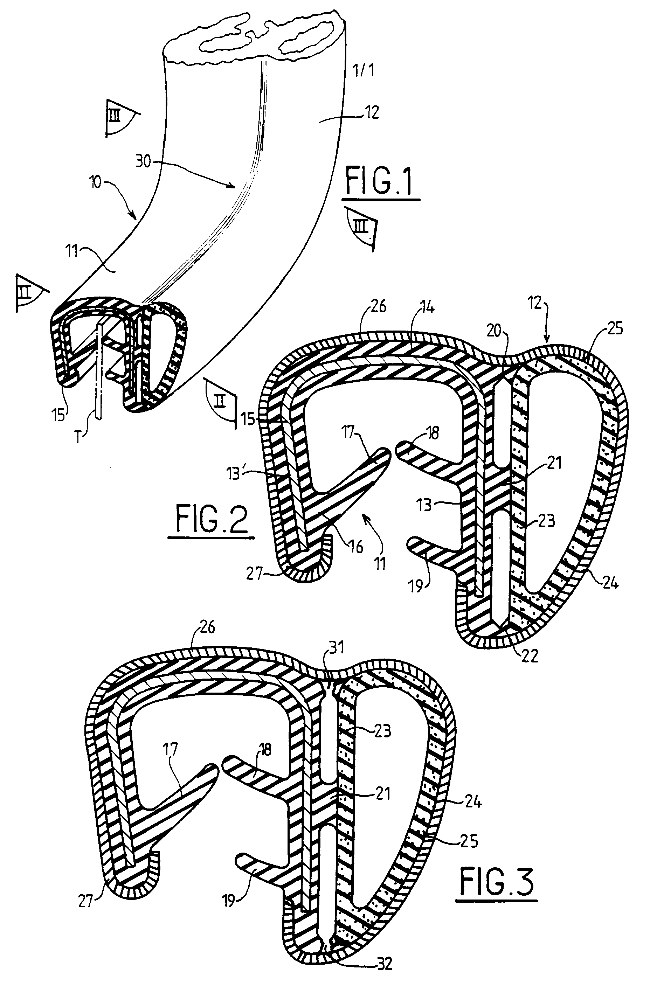

Un dispositif d'étanchéité selon l'invention, 10, figure 1, comprend un élément 11 ou pince à section droite en Π, pour la fixation sur la tôle T du bâti ou de la caisse d'un véhicule automobile et un élément d'étanchéité tubulaire 12. L'élément de fixation 11, qui comporte de façon en soi connue une armature 15 noyée dans une matrice 16 en matériau élastomère ou plastomère ménageant des ailes 13, 13' et un dos 14, est également muni, sur ses faces internes, de lèvres 17, 18, 19 destinées au maintien du dispositif sur la tôle T et qui sont, comme également connu, en le même matériau ou en un matériau différent de celui formant la matrice 16, l'ensemble étant généralement fabriqué par extrusion ou coextrusion sur l'armature 15 du ou des matériau(x) constitutif(s) de la pince. C'est également lors de ce processus de fabrication qu'est obtenu l'élément profilé tubulaire 12, avantageusement en un matériau cellulaire, et qui est relié à la pince 11 le long de bandes de pontage comme 20, 21 et 22 disposées sensiblement aux extrémités et dans la zone médiane de l'aile 13 et de la face 23 de l'élément profilé tubulaire 12 qui en est la plus proche.

Dans la forme de réalisation décrite et représentée, la surface externe du dispositif est munie d'un revêtement textile, du type velours ou analogue, 24, lequel règne sur la face externe 25 de l'élément profilé tubulaire 12, sur le "dos" 14 reliant les ailes 13 et 13' où il forme un revêtement 26, et sur la face externe de l'aile 13' suivant un revêtement 27.

Lorsqu'un tel dispositif d'étanchéité est conformé comme montré sur la figure 1, c'est-à-dire avec au moins une partie incurvée 30, la solidarisation suivant les bandes de pontage 20-22 de l'élément tubulaire 12 et de la pince 11 ne permet pas une "prise de rayon" satisfaisante et l'invention propose alors, pour permettre cette "prise de rayon", de désolidariser l'élément tubulaire 12 de la pince 11 en sectionnant, localement, -c'est-à-dire en des zones discrètes-, les bandes de pontage 20 et 22 comme montré en 31 et 32 sur la figure 3, l'élément tubulaire 12 étant alors rendu "flottant" par rapport à la pince 11 au droit desdites zones.

L'interruption, en des zones discrètes, de la liaison entre l'élément tubulaire 12 et la pince 11 permet de rapporter par collage la garniture textile de velours ou analogue sur toute la longueur de l'élément tubulaire 12 et en partie sur la pince 16 sans qu'il n'en résulte d'ondulations défavorables à l'aspect du produit comme il en apparaîtrait nécessairement au cas où l'élément tubulaire 12 serait désolidarisé et rendu "flottant" par rapport à la pince 11 sur toute la longueur dudit élément et de ladite pince.

Un dispositif selon l'invention permet alors le montage simple et satisfaisant eu égard à son aspect d'un joint d'étanchéité à velours sur des automobiles de prix élevé où de tels joints sont utilisés pour contribuer à leur image de luxe et de finition particulièrement soignée.

## Revendications

1. Dispositif d'étanchéité comprenant un élément de fixation (11) de section en U à un support (T), notamment le bâti ou la caisse d'un véhicule automobile, et un élément profilé tubulaire (12) avec lequel est propre à coopérer à étanchéité une partie mobile comme une porte, capot de moteur, de coffre ou analogue de l'automobile, caractérisé en ce que l'élément profilé tubulaire (12) est rattaché à l'élément de fixation (11) le long d'au moins une bande de pontage centrale (21) et deux bandes de pontage latérales (20, 22), et en ce que les bandes de pontage latérales sont sectionnées localement dans les parties d'angle du support (T) en des zones discrètes (31, 32), l'élément profilé tubulaire (12) restant rattaché à l'élément de fixation (11) dans ces zones (31, 32) par la bande de pontage centrale (21).

2. Dispositif selon la revendication 1, caractérisé en ce que l'élément profilé tubulaire (12) au moins est garni sur sa face externe (25) d'un revêtement comme un velours ou analogue (24).

3. Dispositif selon la revendication 1 ou 2, caractérisé en ce que l'élément profilé tubulaire (12) est en un matériau cellulaire.

## Claims

1. A sealing device comprising a fixing element (11) having a U-shaped section for fixing it to a support (T), in particular the framework or the bodywork of a motor vehicle, and a tubular section element (12) with which a moving portion of the vehicle such as a door, an engine hood, a trunk cover or the like of the vehicle is suitable for co-operating in sealed manner, characterized in that the tubular section element (12) is connected to the fixing element (11) along at least by a central bridging strip (21) and two lateral bridging strips (20, 22), and in that the lateral bridging strips are locally cut in discrete zones (31, 32) in the angular portions of the fixing element (11), the tubular section element (12) being maintained connected to the fixing element (11) in said zones (31, 32) by the central bridging strip (21).

2. A device according to claim 1, characterized in that at least the tubular section element (12) is lined on its outside face (25) with lining such as a velvet or the like (24).

3. A device according to claim 1 or 2, characterized in that the tubular section element (12) is made of a cellular material.

## Patentansprüche

1. Dichtungsvorrichtung mit einem U-förmigen Element (11) zur Befestigung an einem Träger (T), insbesondere dem Rahmen oder Aufbau eines Kraftfahrzeugs, und einem profilierten, rohrförmigen Element (12), mit dem es geeignet ist, zur Abdichtung eines beweglichen Teils, wie einer Tür, Motor-, Kofferraumhaube oder dergleichen eines Kraftfahrzeugs, zusammenwirken, dadurch **gekennzeichnet,** daß das profilierte, rohrförmige Element (12) am Befestigungselement (11) längs mindestens eines mittigen Überbrückungsstreifens (21) und zweier seitlicher Überbrückungsstreifen (20, 22) befestigt ist, und daß die seitlichen Überbrückungsstreifen örtlich in den Winkelteilen des Trägers (T) in getrennte Zonen (31, 32) unterteilt sind, wobei das profilierte, rohrförmige Element (12) an dem Befestigungselement (11) in diesen Zonen (31, 32) nur durch den mittigen Überbrückungsstreifen (21) befestigt bleibt.

2. Vorrichtung nach Anspruch 1, dadurch **gekennzeichnet,** daß das rohrförmige, profilierte Element (12) mindestens an seiner Außenoberfläche (25) mit einer Verkleidung, wie einer Velourverkleidung oder dergleichen (24), versehen ist.

3. Vorrichtung nach Anspruch 1 oder 2, dadurch **gekennzeichnet,** daß das rohrförmige, profilierte Element (12) aus einem zelligen Material besteht.
